# EUROPEAN PATENT SPECIFICATION

(11) **EP 2 590 505 B1**
(45) Date of publication and mention of the grant of the patent: **25.06.2014**
(21) Application number: 11757963.1
(22) Date of filing: 06.07.2011
(51) Int. Cl.: B05B 15/00, A01M 7/00

(54) **FIELD CROP SPRAY APPARATUS FOR SPRAYING CROPS WITH LIQUIDS**
FELDPFLANZENSPRÜHGERÄT ZURM BESPRÜHEN VON PFLANZEN MIT FLÜSSIGKEITEN
APPAREIL DE PULVÉRISATION DE CULTURES AGRICOLES SERVANT À PULVÉRISER DES LIQUIDES SUR DES CULTURES

(30) Priority: 06.07.2010 NL 2005035
(43) Date of publication of application: 15.05.2013
(73) Proprietor: Hoeben, Henricus Johannes Godefridus Maria, 6026 RH Maarheeze (NL)
(72) Inventor: Hoeben, Henricus Johannes Godefridus Maria, 6026 RH Maarheeze (NL)
(74) Representative: Verhees, Godefridus Josephus Maria
(86) International application number: PCT/NL2011/050491
(87) International publication number: WO 2012/005584

(56) References cited:
- EP-A1- 1 083 789
- EP-A2- 2 098 117
- GB-A- 2 273 028
- US-A- 4 659 017
- US-A- 5 062 572

## Description

### Field of the invention.

The invention relates to a field crop spray apparatus for spraying crops with liquids, the apparatus comprising an elongated carrier, a plurality of frames connected to the carrier and present at the bottom thereof, an elongated blade connected to the frames and running parallel to the carrier, and sprayers connected to the blade, which field crop spray apparatus is intended to be coupled to an agricultural tractor where the carrier extends at right angles to the direction of movement of the agricultural tractor.

### State of the art.

A field crop spray apparatus of this kind is known from EP-A-1 083 789. In this known field crop spray apparatus frames present between the carrier and the blade are made of an elastic material. Owing to undulations of the ground the carrier moves up and down during the use of the field crop spray apparatus. During a down movement of the carrier the blade meets with more resistance from the crop so that the frames spring inwardly. As a result, the sprayers continue to maintain their distance from the crop, so that the liquid is distributed uniformly over the crop.

### Summary of the invention.

It is an object of the invention to improve the known field crop spray apparatus. To this end the field crop spray apparatus according to the invention is characterised in that the blade is connected to the frames in a hinging manner and the spray apparatus furthermore comprises at least one cylinder which is connected to the carrier or at least one of the frames, as well as a piston which is movable inside the cylinder and is connected to the blade at a location at a distance from the connection of the blade to the frame. During operation the movement of the blade can be damped by the cylinder. Furthermore, the cylinder can be operated in that the piston can raise the blade. The field crop spray apparatus with a raised blade takes up less space and the distance to the ground is larger, so that the field crop spray apparatus can be transported over the road in a simpler manner.

An embodiment of the field crop spray apparatus according to the invention is characterised in that the piston can be moved with one end in a slot present in the blade. As a result, the cylinder can be rigidly attached to the carrier.

A further embodiment of the field crop spray apparatus according to the invention is characterised in that the piston can be disconnected from the blade. This can lead to an operating condition in which the blade can rotate freely without experiencing a damping effect from the cylinder.

In this operating condition it may be advantageous for the blade to be connected to the frame by means of a radial damper or linear damper so that the hinging movement of the blade is slightly dampened.

A still further embodiment of the field crop spray apparatus according to the invention is characterised in that the frame comprises two parallel arms which are each hingeably connected with one end to the carrier and with the other end are hingeably connected to an intermediate element or the radial damper.

In the field crop spray apparatus according to the invention the sprayer is preferably present on the blade so that there is a substantially constant distance between the sprayer and the crop during operation.

### Brief description of the drawings.

The invention will be elucidated more fully below based on examples of embodiment of the spray apparatus according to the invention while reference is made to the appended drawing figures, in which:
Fig. 1 gives a side view of a first embodiment of the spray apparatus according to the invention during the spraying of the crop;
Fig. 2 shows the spray apparatus where the blade is in transport position;
Fig. 3 shows the spray apparatus where the blade is decoupled from the piston; and
Fig. 4 shows a second embodiment of the spray apparatus according to the invention with a double blade.

### Detailed description of the drawings.

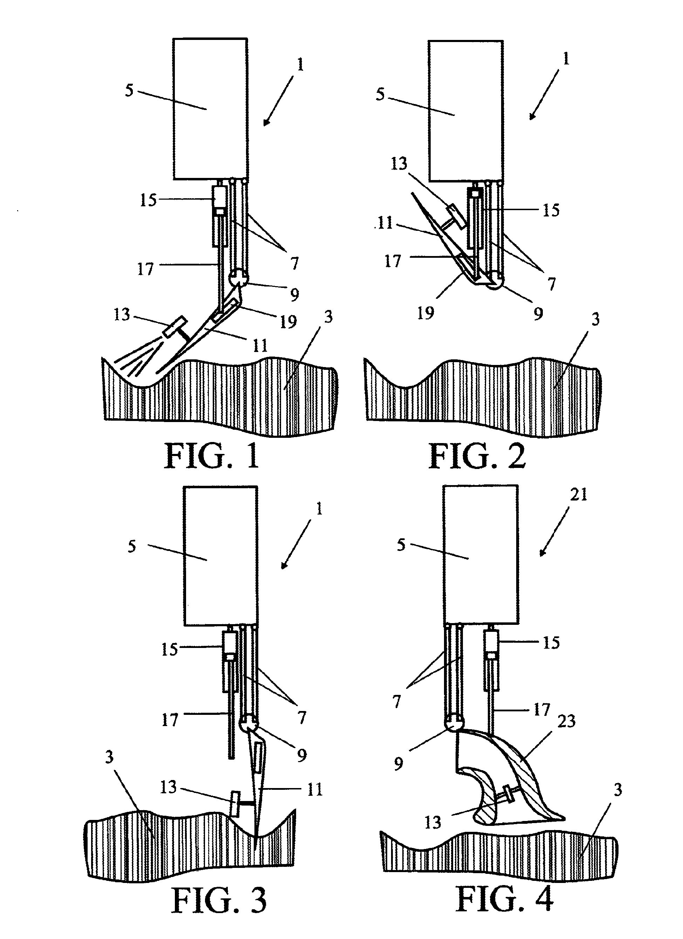

Figs. 1, 2 and 3 show a first embodiment of the field crop spray apparatus 1 according to the invention for spraying liquid on crops 3 in various operating conditions. The spray apparatus 1 comprises a carrier 5 which can be coupled to an agricultural tractor. A plurality of frames 7 are attached to the bottom of the carrier. The free ends of the frames are provided with intermediate elements or rotation dampers 9. An elongated blade 11 is fitted to these dampers. This blade runs parallel to the carrier 5 and sprayers 13 are present on top of the blade 11.

The field crop spray apparatus is intended to be coupled to an agricultural tractor where the carrier extends at right angles to the direction of movement of the agricultural tractor.

The frame 7 comprises two parallel arms which are each connected with one end in a hinging manner or not to the carrier 5 and with the other end also in a hinging manner or not to the radial damper 9 which damps the hinging movement of the blade 5.

The field crop spray apparatus 1 further comprises a cylinder 15 which is connected to the carrier 5, and also a piston 17 that is movable inside the cylinder 15 and is connected to the blade at a distance from the connection of the blade 11 to the rotation damper 9. The piston 17 can be moved with one end in a slot 19 present in the blade 11 and can also be disconnected from the blade.

Fig. 4 shows a second embodiment of the field crop spray apparatus according to the invention. This spray apparatus 21 is provided with a double blade 23. The two blades are then present at a distance from each other and the sprayer 13 is located in the channel formed between the blades.

Albeit the invention has been described in the foregoing with reference to the drawings, it should be pointed out that the invention is not by any manner or means restricted to the embodiments shown in the drawings. The invention also extends over any embodiment deviating from the embodiments shown in the drawing figures within the scope defined by the claims.

## Claims

1. A field crop spray apparatus (1) for spraying crops (3) with liquids, the apparatus comprising an elongated carrier (5), a plurality of frames (7) connected to the carrier and present at the bottom thereof, an elongated blade (11) connected to the frames and running parallel to the carrier, and sprayers (13) connected to the blade, which field crop spray apparatus is intended to be coupled to an agricultural tractor where the carrier extends at right angles to the direction of movement of the agricultural tractor, **characterised in that** the blade (11) is connected to the frames (7) in a hinging manner and the spray apparatus furthermore comprises at least one cylinder (15) which is connected to the carrier (5) or at least one of the frames, as well as a piston (17) which is movable inside the cylinder and is connected to the blade at a location at a distance from the connection of the blade to the frame.

2. A field crop spray apparatus as claimed in claim 1, **characterised in that** the piston (17) can be moved with one end in a slot (19) present in the blade (11).

3. A field crop spray apparatus as claimed in claim 1 or 2, **characterised in that** the piston (17) can be disconnected from the blade (11).

4. A field crop spray apparatus as claimed in claim 1, 2 or 3, **characterised in that** the blade (11) is connected to the frame (7) by means of a radial damper (9) or linear damper.

5. A field crop spray apparatus as claimed in any one of the preceding claims, **characterised in that** the frame (7) comprises two parallel arms which are each hingeably connected with one end to the carrier (5) and with the other end are hingeably connected to an intermediate element or the radial damper (9).

6. A field crop spray apparatus as claimed in any one of the preceding claims, **characterised in that** the sprayer (13) is present on the blade (11).

## Patentansprüche

1. Sprühvorrichtung (1) zum Besprühen von Gewächsen (3) mit Flüssigkeit, bestehend aus einem länglichen Träger (5), einigen unten am Träger vorhandenen und mit dem Träger verbundenen Rahmen (7), einem mit den Rahmen verbundenen und parallel zum Träger verlaufenden länglichen Blatt (11), und mit dem Blatt verbundenen Sprühdüsen (13), welche Sprühvorrichtung an einen Ackerschlepper montiert werden kann, wobei der Träger sich rechtwinklig zur Fortbewegungsrichtung des Ackerschleppers erstreckt, **dadurch gekennzeichnet, dass** das Blatt (11) gelenkig mit den Rahmen (7) verbunden ist und die Sprühvorrichtung ferner mindestens einen Zylinder (15) umfasst, der mit dem Träger (5) oder mindestens mit einem der Rahmen verbunden ist, sowie mindestens einen im Zylinder bewegbaren Kolben (17), der im Abstand von der Verbindung des Blattes mit dem Rahmen mit dem Blatt verbunden ist.

2. Sprühvorrichtung nach Anspruch 1, **dadurch gekennzeichnet, dass** der Kolben (17) an einem Ende in einem Schlitz (19) im Blatt (11) verschiebbar ist.

3. Sprühvorrichtung nach Anspruch 1 oder 2, **dadurch gekennzeichnet, dass** der Kolben (17) vom Blatt (11) abgekoppelt werden kann.

4. Sprühvorrichtung nach Anspruch 1, 2 oder 3, **dadurch gekennzeichnet, dass** das Blatt (11) über einen radialen Dämpfer (9) oder einen linearen Dämpfer mit dem Rahmen (7) verbunden ist.

5. Sprühvorrichtung nach einem der vorgenannten Ansprüche, **dadurch gekennzeichnet, dass** der Rahmen (7) zwei parallele Arme umfasst, von denen jeder mit einem Ende gelenkig mit dem Träger (5) und mit dem anderen Ende beweglich mit einem Zwischenelement oder dem radialen Dämpfer (9) verbunden ist.

6. Sprühvorrichtung nach einem der vorgenannten Ansprüche, **dadurch gekennzeichnet, dass** die Sprühdüse (13) am Blatt (11) angeordnet ist.

## Revendications

1. Dispositif d'arrosage (1) pour pulvériser du liquide sur des plantations (3), comprenant un porteur (5) de forme allongée, un certain nombre de cadres (7) se trouvant au-dessous du porteur et étant reliés au porteur, un plateau (11) de forme allongée relié aux cadres et parallèle au porteur, et des arroseurs (13) reliés au plateau, lequel dispositif d'arrosage est destiné à être monté sur un tracteur agricole, où le porteur s'étend perpendiculairement au sens de la marche du tracteur agricole, **caractérisé en ce que** le plateau (11) est articulé sur les cadres (7) et **en ce que** le dispositif d'arrosage comprend de plus au moins un cylindre (15) relié au porteur (5) ou à au moins un des cadres, ainsi qu'au moins un piston (17) étant mobile dans le cylindre et étant relié au plateau à un endroit situé à distance de la jonction entre le plateau et le cadre.

2. Dispositif d'arrosage selon la revendication 1, **caractérisé en ce que** le piston (17) peut être déplacé, en une de ses extrémités, dans une fente (19) se trouvant dans le plateau (11).

3. Dispositif d'arrosage selon la revendication 1 ou 2, **caractérisé en ce que** le piston (17) peut être déconnecté du plateau (11).

4. Dispositif d'arrosage selon la revendication 1, 2 ou 3, **caractérisé en ce que** le plateau (11) est relié au cadre (7) par l'intermédiaire d'un silencieux radial (9) ou d'un silencieux linéaire.

5. Dispositif d'arrosage selon une des revendications précédentes, **caractérisé en ce que** le cadre (7) comprend deux bras parallèles qui sont chacun, en une de leurs extrémités, articulés au cadre (5) et sont, en leur autre extrémité, articulés à un élément intermédiaire ou au silencieux radial (9).

6. Dispositif d'arrosage selon une des revendications précédentes, **caractérisé en ce que** l'arroseur (13) se trouve sur le plateau (11).
